Europäisches Patentamt

European Patent Office

Office européen des brevets

(19)

(11) Publication number: **0 312 057 B1**

(12) **EUROPEAN PATENT SPECIFICATION**

(45) Date of publication of patent specification: **29.07.92**    (51) Int. Cl.5: **B22D 41/08**

(21) Application number: **88117035.1**

(22) Date of filing: **13.10.88**

(54) **High-durability plate brick for sliding gate nozzle apparatus.**

(30) Priority: **15.10.87 JP 261336/87**

(43) Date of publication of application:
**19.04.89 Bulletin 89/16**

(45) Publication of the grant of the patent:
**29.07.92 Bulletin 92/31**

(84) Designated Contracting States:
**DE FR GB IT**

(56) References cited:
**US-A- 4 646 950**

**CHEMICAL ABSTRACTS, vol. 96, 29 March-12 April 1982, page 314, abstract no. 109131b, Columbus, Ohio, USA; & JP-A-81 140064**

**CHEMICAL ABSTRACTS, vol. 97, 26 July-9 August 1982, pages 255, 256, abstracts no. 43059-43062, Columbus, Ohio, USA; & JP-A-82 27968-71**

(73) Proprietor: **KUROSAKI REFRACTORIES CO. LTD.**
**1-1, Higashihama-machi Yahatanishi-ku Kitakyushu-shi Fukuoka 806(JP)**

(72) Inventor: **Harada, Tsutomu c/o Kurosaki Refractories Co.,Ltd.**
**1-1, Higashihama-machi Yahatanishi-ku Kitakyushu-shi Fukuoka-ken(JP)**
Inventor: **Shikano, Hiroshi c/o Kurosaki Refractories Co.,Ltd**
**1-1, Higashihama-machi Yahatanishi-ku Kitakyushu-shi Fukuoka-ken(JP)**

(74) Representative: **Patentanwälte Deufel, Hertel, Lewald**
**Isartorplatz 6 Postfach 26 02 47**
**W-8000 München 26(DE)**

## Description

The present invention relates to a plate brick for a sliding gate nozzle (hereinunder referred to as "SN") apparatus which is used for controlling a flow rate of a molten metal on casting.

An SN apparatus is generally composed of three parts, namely, an upper nozzle, a plate brick consisting of a fixed plate and a sliding plate, and a lower nozzle. Among these, the plate brick is a part which is required to have the specialized properties for the function of controlling the flow rate of a molten metal.

Since the plate brick is subject to physical and chemical attack such as violent thermal shock and wear caused by a stream of molten metal, spalling resistance and corrosion resistance are the most important properties required for working the plate brick. Further, in order to obtain stable high durability, oxidation resistance and mechanical strength are also important properties to have in addition to the above properties.

The present inventors previously disclosed in Japanese Patent Publication No. 60-29664 an improved SN plate in resistance against the deterioration of the mechanical strength in the middle temperature range (400 to 700 °C ) and the spalling resistance and the corrosion resistance which is prepared by admixing 2 to 15 wt% of a thermosetting synthetic resin such as phenol resins, furan resins and epoxy resins with a refractory aggregate including 1 to 20 wt% of a powder of a low-melting metal having a particle size of not more than 0.5 mm, molding and heating the resultant mixture, to a temperature of not higher than 800° C.

Improvement in the mechanical strength of thus prepared SN plate brick was achieved by heating at temperature from about 150 to 250°C .

There are, however, problems are still remaining unsolved, that improvement of mechanical strength at a temperature higher than 300°C that SN plate is practically subject to, can not be expected due to oxidation.

Accordingly, an object of the present invention is to provide a plate brick for an SN apparatus having a mechanical strength at a temperature higher than 300°C highly balanced with oxidation resistance as well as high corrosion and spalling resistance.

According to the patent invention, the above and other objects can be accomplished by a high-durability plate brick for a sliding gate nozzle apparatus consisting of a refractory aggregate mixture containing 1 to 20 wt.% of powdered metal or metals having a particle size not exceeding 0.5 mm and selected from a group consisting of Aℓ, Mg, Zn, Sn, Ba and Pb, 2 to 15 wt.% of a thermosetting resin selected from a group consisting of a phenol resin, a furan resin and an epoxy resin, and 10 to 90 wt.% of a silicon resin.

It has been surprisingly found that by employing a resin mixture consisting of one or more of thermosetting resins it easily exhibits a higher mechanical strength when heated to about 150 to 250°C added with a silicon resin that has been known as a resin having properties which can be revealed of oxidation resistance when employed in a refractory material but it has been known that it is lack in ability for improvement of mechanical strength .

As a refractory aggregate which said resin mixture is admixed with, in the present invention, any of one or more than two selected from a group consisting of silica, alumina, silica-alumina, magnesia, spinel, chromium ore, SiC, $Si_3N_4$, $B_4C$, BN and carbonaceous materials such as graphite and amorphous carbon is usable.

As the low-melting metal to be included in said refractory aggregate, at least one metal having a low melting point not higher than 1,000 °C and selected from the group consisting of Al, Mg, Zn, Sn, Ba and Pb and an alloy thereof is usable. The amount of said low-melting metal included in the refractory aggregate may be from 1 to 20 wt% and the particle size thereof may not exceed 0.5 mm preferably.

As examples of the thermosetting resin which easily exhibits a higher mechanical strength when heated to about 150 to 250°C, a phenol resin, a furan resin and an epoxy resin. And a resin which can be set at room temperature by use of a catalysit should be as said thermosetting resin in this invention.

As an silicon resin, silicone resin is most preferable from a view point of oxidation resistance. The amount of silicon resin added to at least one resin of the above is 10 to 90 wt% to the thermosetting resin employed. If the amount is less than 10 wt%, it is difficult to maintain stable high oxidation resistance. On the other hand, if the amount is more than 90 wt%, it is difficult to maintain the stable mechanical strength. Said mixed resin may be prepared before adding to the refractory aggregate, or may be added separately to the refractory aggregate in a mixer. The amount of resin mixture to be added is dependent on the bulk specific gravity of the refractory aggregate to a certain extent, but is preferably 2 to 15 wt%. If it is less than 2 wt%, molding becomes impossible; if more than 15 wt%, it makes molding difficult.

On preparing the SN plate brick, the refractory aggregate included with said low-melting point metal powder added with said resin mixture is subject to heating at a temperature lower than 1,000 °C., usually a temperature from 100 to 300°C. But when the brick is required to have a higher strength, the molded mixture is heated to a temperature higher than 500 °C to 1,000°C in a non-oxidizing atmosphere in order to melt the low-melting metal or react it with some components of the aggregate. The temperature for heating is not to be higher than 1,000 °C. If it exceeds 1,000 °C, the spalling resistance becomes inferior.

A plate brick for an SN apparatus according to the present invention exerts no deleterious influence on the sliding property, corrosion resistance and spalling resistance even when it is applied to a sliding plate, and enables the mechanical property and the oxidation resistance to be well balanced at a high level, thereby enhancing the durability becomes inferior.

The above and other objects, features and advantages of the present invention are made clear through the following description of the preferred embodiment thereof, taken in conjunction with the accompanying drawing.

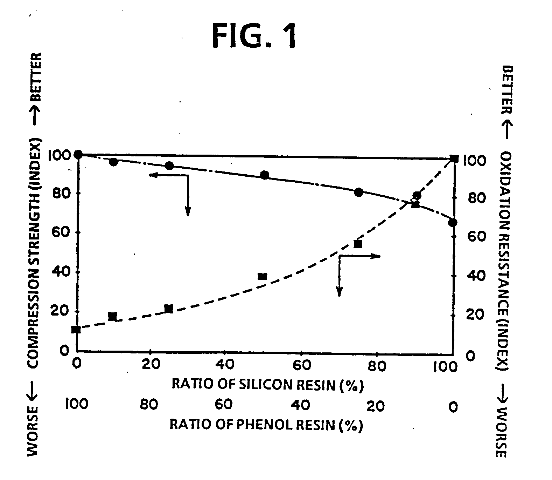

Fig. 1 shows a change in the mechanical strength (index of compression strength) and the oxidation resistance of a brick exhibited when the mixing ratio of a silicon resin and a phenol resin are varied in the composition shown in Table 1.

Alumina and aluminium were used as respectively as the refractory aggregate and as the low-melting point metal As a thermosetting resin which easily exhibits a higher mechanical strength when heated to about 150 to 250°C, a phenol resin was selected. The phenol resin was mixed with a silicon resin in ratios of 75 : 25, 50 : 50 and 25 : 75, respectively, and the aggregate and the resin mixture were heated in a bottom rotating mixer. The resultant mixture was molded in the form of a friction press plate, which was thermoset at 250°C for 24 hours, thereby obtaining the plate for an SN apparatus. The compositions, the mixing ratios and the properties of the respective plates are shown in Table 1.

For comparison, a plate which contains no silicon resin and a plate which contains no phenol resin were produced in the same method, and the properties thereof are also shown in Table 1.

Table 1

| Ingredient | Sampla No. | | | | |
|---|---|---|---|---|---|
| | 1 (Comp.) | 2 | 3 | 4 | 5 (Comp.) |
| Alumina powder | 91 | 91 | 91 | 91 | 91 |
| Clay powder | 2 | 2 | 2 | 2 | 2 |
| Carbon powder | 2 | 2 | 2 | 2 | 2 |
| Al | 5 | 5 | 5 | 5 | 5 |
| Phenol resin | + 5 | + 3.75 | + 2.5 | + 1.25 | - |
| Silicon resin | - | + 1.25 | + 2.5 | + 3.75 | + 5 |
| Properties | | | | | |
| Bulk specific gravity | 3.11 | 3.13 | 3.12 | 3.13 | 3.13 |
| Apparent porosity (%) | 10.6 | 10.0 | 9.9 | 8.9 | 7.8 |
| Compression strength (kg/cm$^{-2}$) | 1200 | 1136 | 1091 | 996 | 812 |
| BS Wear index* after oxidation (600°C × 2hr) | 270 | 134 | 74 | 52 | 29 |

*The smaller the numeral, the better.

As is obvious from Table 1, the mechanical strength is balanced well with the oxidation resistance in the samples 2, 3 and 4 which are in accordance with the present invention in comparison with the samples 1 and 5 in the comparative example.

When sample 3 was subjected to a practical test in an SN apparatus of a 60-ton ladle, it showed a remarkable improvement in durability compared with conventional bricks which had used only a phenol resin or a silicon resin. In addition, there was little deterioration of the sliding surface after use due to oxidation and deterioration of the construction due to physical wear. Thus, the test of sample 3 brought about very good results.

Furthermore, a the mechanical strength (index of compression strength) and the oxidation resistance were measured while varying the ratio of the silicon resin and the phenol resin in the composition shown in Table 1. The results are shown in Fig. 1.

The compression strength (index) of each sample is indicated by the mark - ● - on the assumption that the compression strength is 100 when the phenol resin contained is 100%.

The oxidation resistance index k was calculated from the following formula on the basis of the BS wear index of the surface of the brick measured after 2-hour oxidation treatment.

4

$$k = \frac{1}{BS\ wear\ index} \times 100$$

The oxidation resistance index of each sample was represented by the mark ... ■ ... on the assumption that the compression strength is 100 when the silicon resin contained is 100%.

## Claims

**1.** A high-durability plate brick for a sliding gate nozzle apparatus consisting of a refractory aggregate mixture containing 1 to 20 wt.% of powdered metal or metals having a particle size not exceeding 0.5 mm and selected from a group consisting of Aℓ, Mg, Zn, Sn, Ba and Pb, 2 to 15 wt.% of a thermosetting resin selected from a group consisting of a phenol resin, a furan resin and an epoxy resin, and 10 to 90 wt.% of a silicon resin.

## Revendications

**1.** Brique à plaque de grande durabilité pour un appareil à obturateur coulissant, formée d'un mélange d'agrégat réfractaire contenant 1 à 20 % en poids de poudre de métal ou de métaux ayant une grosseur de particules ne dépassant pas 0,5 mm et choisis dans le groupe formé par Al, Mg, Zn, Sn, Ba et Pb, 2 à 15 % en poids d'une résine thermodurcissable choisie dans le groupe formée de résines phénoliques, résines furanniques et résines époxy, et 10 à 90 % en poids d'une résine au silicium.

## Patentansprüche

**1.** Hochbeständiger Plattenziegel für eine Schiebervorrichtung, der aus einer Feuerfestaggregat-Mischung besteht, die
   - 1 bis 20 Gew.-% pulverisiertes Metall oder Metalle mit einer Partikelgröße, die 0,5 mm nicht übersteigt und das (die) aus einer Gruppe, die Aℓ, Mg, Zn, Sn, Ba und Pb umfaßt, ausgewählt ist (sind),
   - 2 bis 15 Gew.-% eines wärmehärtenden Harzes, das ausgewählt ist aus einer Gruppe, die ein Phenolharz, ein Furanharz und ein Epoxyharz umfaßt, und
   - 10 bis 90 Gew.-% eines Siliciumharzes,
   enthält.

# FIG. 1